## Europäisches Patentamt

## European Patent Office

## Office européen des brevets

(11) Publication number: **0 056 600 B1**

(12) **EUROPEAN PATENT SPECIFICATION**

(45) Date of publication of patent specification: **28.11.84**

(21) Application number: **82100149.2**

(22) Date of filing: **11.01.82**

(51) Int. Cl.³: **H 04 Q 11/04**

(54) Modular structure of PCM-switched distributed control and distributed-diagnostic network.

(30) Priority: **15.01.81 IT 6703681**

(43) Date of publication of application:
**28.07.82 Bulletin 82/30**

(45) Publication of the grant of the patent:
**28.11.84 Bulletin 84/48**

(84) Designated Contracting States:
**AT BE CH DE FR GB LI NL SE**

(56) References cited:
**EP-A-0 003 448**
**EP-A-0 026 931**
**EP-A-0 027 226**
**EP-A-0 034 776**
**EP-A-0 039 134**
**EP-A-0 039 948**
**FR-A-2 382 819**
**GB-A-2 029 671**
**US-A-4 093 827**
**INTERNATIONAL SWITCHING SYMPOSIUM,
7th-11th May 1979, pages 829-833, Paris (FR) B.
DUPUIS et al.: "Réseau de brassage du
système E 12"**

(73) Proprietor: **CSELT Centro Studi e Laboratori
Telecomunicazioni S.p.A.
Via Guglielmo Reiss Romoli, 274
I-10148 Turin (IT)**

(72) Inventor: **Belforte, Piero
Via Fabbriche, 7
Torino (IT)**
Inventor: **Bondonno, Mario
Via Italia, 35
Borgaro Torinese Torino (IT)**
Inventor: **Garetti, Enzo
Via M.te Vodice, 18
Torino (IT)**
Inventor: **Guaschino, Giancarlo
C.so Duca degli Abruzzi, 12
Torino (IT)**
Inventor: **Pilati, Luciano
Via Sospello, 121
Torino (IT)**

(74) Representative: **Riederer Freiherr von Paar zu
Schönau, Anton
Freyung 615 Postfach 2664
D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

(56) References cited:
**THE TRANSACTIONS OF THE IECE OF JAPAN,**
**vol. E 63, no. 2, 2nd February 1980, pages 136**
**and 147, Tokyo (JP) K. OKADA et al.: "A**
**building blocked switching network using**
**microprocessors"**
**INTERNATIONAL SWITCHING SYMPOSIUM,**
**25th-29th October 1976, pages 423-3-1 to**
**423-3-8, Kyoto (JP) K.E. WURHMANN:**
**"Corrective maintenance in the integrated PCM**
**telecommunications system IFS-1"**

## Description

The present invention concerns PCM-switching systems and more particularly it concerns the structure of modularly expandable, distributed-control, PCM-switching networks, which also comprise control and diagnostic functions, locally implemented by commercially available microprocessors.

The main properties an up-to-date switching network ought to have are the following:

a) capacity ranging from a few hundreds, of channels (local exchanges) to hundreds of thousands of channels (transit exchanges), by using a small number of different kinds of switching elementary modules, i.e. minimum building units easy to replace;

b) use of high-flexibility switching elementary modules so that they may cover as wide a range as possible of applications in the switching field, without significantly suffering from technological component development;

c) expanding network capacity in a modular way, by maintaining a good efficiency in the ratio between used hardware and number of equipped channels;

d) network control structure independent of the centralized telephone control of the exchange, so as to make it free from the network management;

e) network control structure, if possible of the distributed type, so that the ratio between the installed processing power and the number of channels to be served, may be optimized;

f) network diagnostic independent of the whole diagnostic function and decentralized to the level of single switching elementary module so that a quick failure detection and localization may be obtained;

g) network blocking characteristics capable of assuring negligible losses in whatever chosen structure and under whatever equipment condition for maximum traffic conditions envisaged;

h) network control with minimal connection actuating times and capacity of carrying out as many connecting requests as possible;

i) minimal transit delay of the PCM samples through the network;

l) minimum encumbrance and power dissipation in comparison with the number of equipped channels;

m) characteristic of network degradation, that in case of failure, drastically limits the number of channels gone out of service.

Various network structures are known in the technique which more or less satisfactorily meet some of the above mentioned requirements.

For instance, in the American Patent No. 4 093 827 in the name of Thomson-CSF, a network is described equipped with a symmetrical time-division operating matrix which integrates the functions of signal memory, control memory, and interface towards PCM lines, serving channels organized into 8 groups.

More particularly the Figure 11 of said patent illustrates a five-stage network (OE, A, B, C, OS) using switching elements implemented in the form of large-scale integrated circuits.

For said network the controls are performed by using a system with two hierarchical levels of which the higher (UC) directly controls the 1st and 5th stage and uses the lower level control (MPP) to perform the control of the three intermediate stages (2nd, 3rd, and 4th stages).

The whole network is provided with a single unit UC and 8 MPP units.

In said American Patent the requirements referred to at points a), c), d), g), h), i), l), m), are fully met; those referred to at e) are not satisfactorily met as the control structure is not adequately distributed.

The requirements referred to at b), f), on the contrary are not met in the above-mentioned patent, since the used symmetrical matrix is not directly controlled and not even controllable by a microprocessor of the commercially available kind nor is the diagnosis decentralized to the level of a single switching module.

The symmetrical matrix is not directly controlled by a microprocessor since its interface towards the control units is of the synchronous serial type and therefore said matrix is not flexible.

Structures capable of adequately meeting either all the above mentioned requirements or those left partially or totally unsolved by the above mentioned American Patent are still unknown in the technique.

These problems are solved by the present invention of a modular structure of a PCM-switching network with distributed-control, distributed-diagnosis and with a plurality of time stages; the network, being equipped with a local microprocessor control-unit, is extremely flexible in the implementation of the typical switching functions; it is open to possible future technological developments of the integrated elements used; it achieves a considerable control distribution allowing the ratio between the processing power, installed under any equipment conditions, and the number of served channels to be optimized; being equipped with auxiliary circuits specialized in diagnosis it allows the operations of diagnosis, failure localization and reconfiguration to be expanded to the level of every building unit, covering also the failures concerning the connection between the single switching modules forming the network, without requiring the generation of an artificial test traffic of the connection and consequently, with negligible circuit overload, it achieves a quick and reliable identification of the single building unit in trouble, and the consequent system identification so that it might isolate the failing unit without any considerable prejudice to the service continuity.

According to this invention there is provided a modular structure PCM distributed-control and distributed-diagnosis switching network, belonging to an exchange having a centralized telephone control unit, and consisting of modular switching units functionally diversified in a plurality of peripheral switching units folded from the building standpoint and comprising the first and the last time stage of said network, a plurality of central switching units folded from the building standpoint and comprising the second and the last but one time stages and a plurality of unfolded central switching units comprising the intermediate stage of the same network, which switching network is characterized in that each of said peripheral switching units, of said folded central units and of said unfolded central units is physically contained in a single standardized printed circuit board which can be extracted and replaced, said board being the modular structural element of said network structure; and is further characterized in that said modular switching units basically comprise integrated switching-matrices equipped with a microprocessor-compatible asynchronous control system, integrated support circuits for diagnosis and a microprocessor forming the lowest level of a multilevel hierarchical control network; said integrated support circuits performing in conjunction with said microprocessor the distributed diagnosis at the level of each modular structural element.

Embodiments of this invention will now be described, by way of example, with reference to the accompanying drawings wherein:

— Figure 1 is the general scheme of the PCM-switching network provided by the present invention comprising, as elementary modules, the switching units UCC, UCC' and UCP;
— Figure 2 is the block diagram of a peripheral switching unit, folded from the building standpoint, denoted by UCP1 in Figure 1;
— Figure 3 is the block diagram of a central switching unit, folded from the building standpoint, denoted by UCC1 in Figure 1;
— Figure 4 is the block diagram of an unfolded central switching unit denoted by UCC'1 in Figure 1;
— Figure 5 represents the hierarchical organization of the network controllers represented in Figure 1;
— Figure 6 shows an alternative scheme with respect to Figures 2, 3 and 4 considered together.

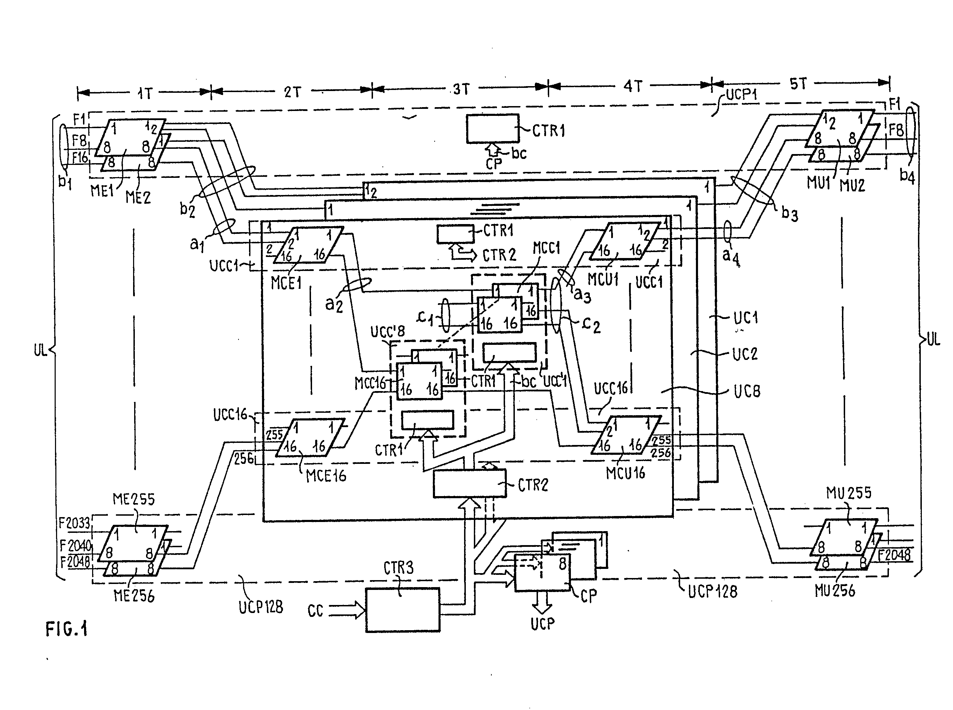

Figure 1 represents, by way of example, the structure of a switching network with 5 time stages with a capacity of 64,000 terminals.

The following concepts, as will be seen hereinafter, can also be applied to network structures, which differ in channel capacity and in number of stages, by any person skilled in the art.

ME1, ME2, ..., ME256 denote 256 PCM switching elements apt to each to process 8 incoming PCM groups out of the 2048 groups (F1, F8, F9, F16, ... F2041, F2048) connected to the switching network and coming from line units UL, not represented in the drawing.

These switching elements, which are the first time stage (1T) of the above-mentioned network, are described in the European patent application No. 81 103 628.4, publication No. 39948, publication date 18.11.81, in the name of the applicant.

They are PCM switching elements each of them comprising: means for converting the bits of incoming channels from series to parallel, a signal memory for storing the digital samples of the incoming channels, means for converting the bits of the outgoing channels from parallel to series, a control memory for storing the connections between incoming and outgoing channels, a control logic apt to receive and process data and commands coming from a control unit, and timing means, in which said control memory is able to store per each outgoing channel an additional bit ("busy" bit) sent by the control unit via the control logic, having the task of causing within the time slots of one or more outgoing channels, to which it is associated at an appropriate logic level, the inhibiting of said means for converting from parallel to series, in order to allow outgoing PCM groups of more switching elements to be connected in parallel, said inhibiting being achieved by replacing digital samples outgoing from said signal memory with words at constant logic level, said control logic being capable of receiving data and commands directly from an asynchronous control-unit on parallel data-bus and on control bus, and of processing data and commands sent by a control unit which is a microprocessor.

This switching element is made as an integrated circuit and can be associated to other similar switching elements to build up a higher capacity switching element.

References UC1, ..., UC8 denote 8 central units or switching planes, each consisting of 3 time stages (2T, 3T, 4T) using switching elements (MCE, MCC) of the same kind as those forming blocks ME1, ..., ME256, but apt to handle each 16 PCM groups instead of 8.

More particularly, as shown in detail for unit UC8, each central unit contains:

— 16 switching elements MCE1, ..., MCE16, each of 16 PCM groups connected as in the Figure to the switching elements ME1, ..., ME256, such that the first PCM group outgoing from the first switching element (ME1) of the 1st stage (1T) is connected to the

**0 056 600**

input No. 1 of central unit UC1, the second PCM group outgoing from ME1 to the input No. 1 of central unit UC2, and so on up to the 8th PCM group outgoing from ME1 which will be connected to the input No. 1 of central unit UC8.

In this way it comes out that all the first PCM groups outgoing from the 256 switching elements ME1, . . ., ME256 are orderly connected to the 256 inputs of the central unit UC1; all the 2nd PCM groups outgoing from the same 256 switching elements are orderly connected to the 256 inputs of central unit UC2, and so on till the 8th PCM groups outgoing from the 256 switching elements are orderly connected to the 256 inputs of the unit UC8.

— 16 switching elements MCC1, . . ., MCC16 each of 16 PCM groups, analogous to the just examined switching elements MCE1, . . ., MCE16, connected at the input to the outputs of the 16 switching elements MCE1, . . ., MCE16 as in the drawing, i.e. such that the first outgoing PCM group of switching element MCE1 is connected to the input 1 of switching element MCC1, the second outgoing PCM group to the 1st input of switching element MCC2, till the 16th outgoing PCM group of switching element MCE1 is connected to the 1st input of switching element MCC16.

Analogously the 1st PCM group outgoing from MCE2 is connected to the 2nd input of switching element MCC1, till the 16th PCM group of switching element MCE16 is connected to the input 16 of MCC16.

In this way it comes out that the first PCM groups outgoing from the 16 switching elements MCE1, . . ., MCE16 are orderly connected to the 16 inputs of the switching element MCC1, the second PCM groups outgoing from switching elements MCE, . . ., MCE16 are orderly connected to the 16 inputs of switching element MCC2, and so on till the 16th PCM groups outgoing from said 16 switching elements MCE1, . . ., MCE16, are orderly connected to the 16 inputs of the switching element MCC16.

— 16 switching elements MCU1, . . ., MCU16 each composed of 16 PCM groups, analogous to the ones above, connected at the input with the outputs of the 16 switching elements MCC1, . . ., MCC16 in an orderly way analogous to that seen for the just described connections between the 16 switching elements MCE1, . . ., MCE16 and the 16 switching elements MCC1, . . ., MCC16.

— 256 switching elements MU1, . . ., MU256, consisting of 8 PCM groups of the same kind as those of switching elements ME1, . . ., ME256, forming the 5th time stage (5T), the inputs of which PCM groups are connected to the outputs of the 8 central units UC1, . . ., UC8 orderly and in a specular way with respect to the already described connections between the 256 switching elements ME1, . . ., ME256 of the first stage (1T) and the 8 central units UC1, . . ., UC8.

As shown from Figure 1, the central stage (3T), consisting of 128 switching elements MCC (16 switching elements per 8 UC units), is placed in symmetrical position with respect to the rest of the network.

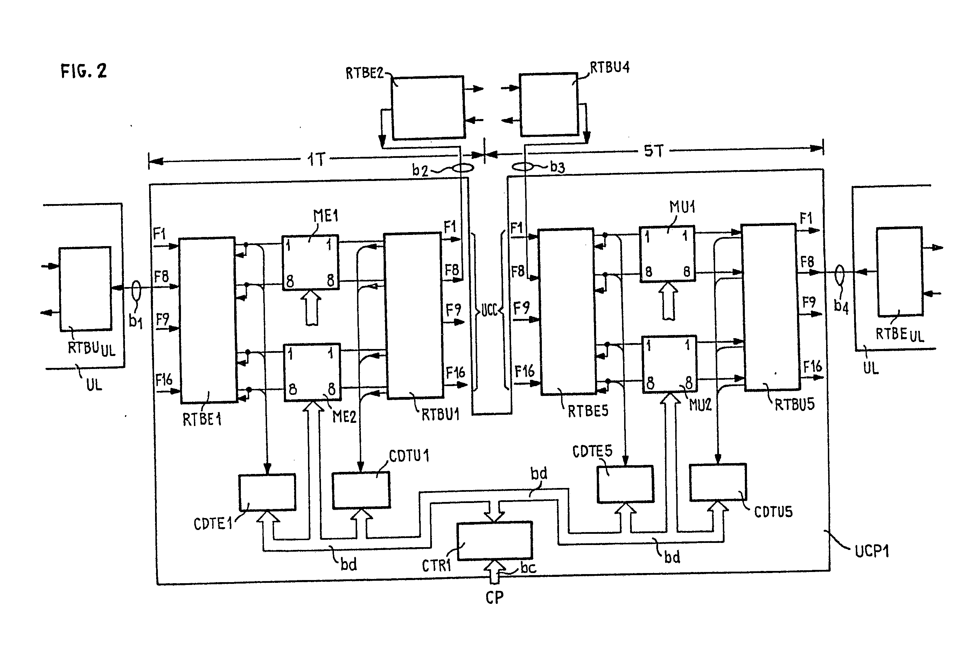

Figure 1 shows in dotted areas (denoted by UCP1, . . ., UCP128, UCC1, . . ., UCC16, UCC'1, . . ., UCC'8) some sets of switching elements and of relative controllers which correspond to actual building modules (printed circuit boards) of the network, hereinafter referred to as peripheral switching units (UPC) and central switching units (UCC) folded from the building standpoint, and examined in detail in Figure 2, 3 and 4. The fact of organizing into an only building module UCP switching elements of the 1st and 5th time stage (1T, 5T) and into another single module UCC switching elements of the 2nd and 4th time stage (2T, 4T) each module being controlled by an only controller CTR1, allows the network shown in Figure 1 to be used as a folded network.

This means the presence on the same switching unit of both the incoming group and the corresponding outgoing group, both groups being diagnosed by the same controller CTR1.

Moreover the folding from the building standpoint of switching units UPC and UCC allows the connecting capacity of the single unit (1024 PCM channels) to be subdivided into two blocks of 512 channels used in the first (1T) and fifth (5T) stages (UCP) and in the second (2T) and fourth (4T) stages (UCC) respectively.

By this method it is obtained a modular growth step of overall network capacity, corresponding to 512 PCM channels rather than to 1024 channels, obtainable by the use of the single switching unit in an unfolded way.

Moreover by this method, in case of failure of any one of said building units, the number of links run out of service can be limited to 512.

The network modular-growth is achieved by progressively increasing at the periphery the number of peripheral switching units UCP, and inside each switching plane UC by progressively increasing the number of folded central switching units UCC.

As a consequence, an increment by a folded central switching unit UCC, on each of the 8 switching planes UC, corresponds to each increment equal to 8 switching units UCP.

The described interstage connection makes the network a complete-accessibility network. The advantages relating to blocking probabilities, growth modularity and degradation modalities presented by this type of structure are well known.

The symmetrical complete-accessibility network, so far examined, is nothing but the exchange switching network.

This network is to be controlled by a control network which for diagnostic and reliability purposes ought to be decentralized.

As previously mentioned, in the patent in the name of Thompson-CSF, the controls are effected by using a two-hierarchical level system.

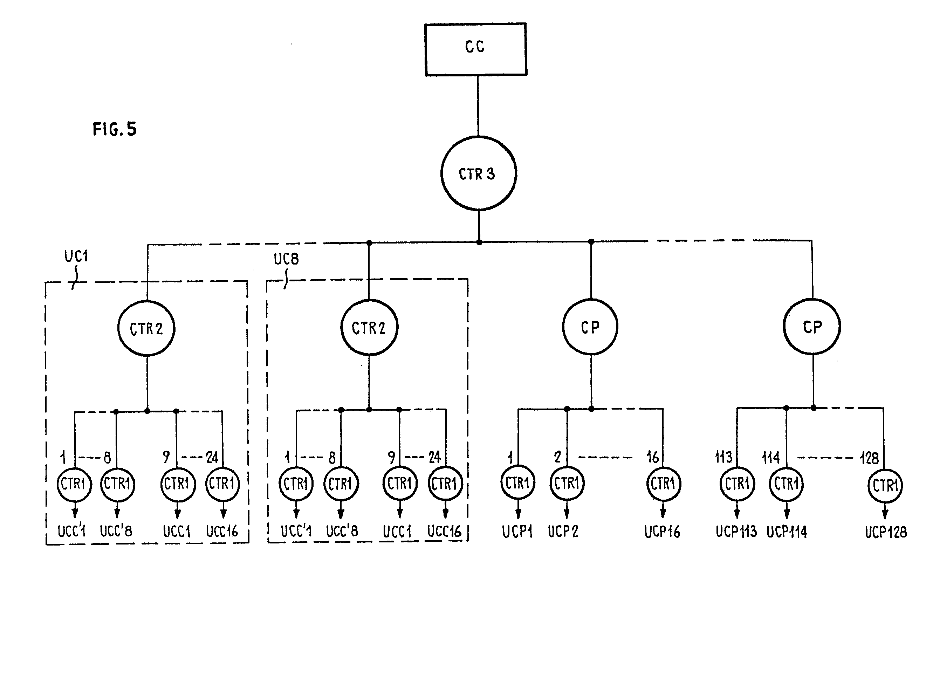

In the present example, as shown also in Figure 5, the switching network controller is further decentralized with respect to the centralized control unit CC of the exchange and is divided into three hierarchically-organized levels, denoted by CTR3, CTR2-CP, CTR1.

The portion which does not belong to such sets (in dotted areas) consists of controllers of 2nd hierarchical level (CTR2-CP) and of the controller CTR3 of the whole network; it is just a portion of the whole network.

CTR3 is the 3rd hierarchical level controller, i.e. the hierarchical highest one, and is obtained with a microprocessor technology of known type.

CTR3 receives from the control unit (CC), entrusted with telephone signalling processing, not shown in Figure 1, the information on connections and releases to be established between the input and output of the whole network. For the connections commands CTR3 searches for a connection path between the 1st stage (1T) and the 2nd one (2T) and between the 4th stage (4T) and the 5th one (5T) based on the busy state of the interstage connections and applying known algorithms for the minimization of the transit delay in said stages.

Once found a possible connection path, CTR3 entrusts the lower-level controllers (CTR2-CP) with the practical connection establishment.

The second-level controller (CTR2-CP) is also obtained by a microprocessor technology of known type. The tasks of the 2nd level controller are assigned as follows.

Each controller CTR2 is to control a unit UC (Figure 1) of 8,000 channels.

CTR2 receives and checks the connect and disconnect messages sent by CTR3, by searching for a route, in case of connect command, or by disengaging the busy paths, in case of disconnect command. Connections between the second time stage (2T) and the third one (3T) and between this one (3T) and the fourth one (4T) are effected based on the busy state of interstage connections and by applying a method for transit delay minimization in said stages.

For every 16 1st-level controllers CTR1, there is one peripheral unit controller CP.

Every CP receives and checks the messages relating to connection and disconnection control signals received from CTR3 and forwards to the 1st-level controller (CTR1) the connect and disconnect commands.

The 1st-level controller CTR1, the hierarchically-lowest, is also obtained with a well-known microprocessor technology. CTR1 controls the central and peripheral switching units, and executes the following operations:

— reception and check of connect and disconnect commands received from CTR2 and CP;
— connect and disconnect commands to the switching elements of Figure 1 composing the single switching units.

How the connect and disconnect commands sent by the central exchange control system (CC) are executed has been examined so far.

The problem of failure localization and diagnosis is solved by equipping all the switching units with their own self-diagnostic system, carried out by the 1st-level controllers CTR1 and by suitable support circuits (CDT, RTB), which will be examined hereinafter, built in each switching unit; thus the unit becomes nearly autonomous (self-sufficient) with regard to failure detection and localization. For the portion of the network (CTR2-CP, CTR3) not implemented by the switching unit the failure diagnostic and reconfiguration can be obtained by known methods.

Figure 2 shows the peripheral switching unit denoted by UCP1 in Figure 1. In it references 1T and 5T denote the same time stages as shown in Figure 1.

ME1, ME2, MU1, MU2, CTR1 denote the same blocks as shown in Figure 1.

In Figure 2 CDTE1, CDTE5 and CDTU1, CDTU5 denote 4 sampling circuits for transfer diagnosis, the first two being placed at the incoming side and the other two at the outgoing side of the peripheral switching unit UCP1.

Said sampling circuits consist each of an integrated circuit, on a large integration scale, performing the extracting function of a bit octet relating to a channel, with a pre-defined frame delay, from a PCM group inside the set of 16 groups entering ME1, ME2 and MU1, MU2. The octet is stored and can be presented on the data bus towards the 1st-level controller CTR1.

Circuits such as CDTE1, CDTE5 are described in the European patent application No. 81 101 030.5, publication No. 34 776, publication date 2.9.81, in the name of the applicant.

References RTBE1, RTBE5 and RTBU1, RTBU5 denote four simultaneous bidirectional transceivers; the first two placed on the incoming side of the first (1T) and fifth (5T) stages respectively and the other two on the outgoing side respectively of the same stages.

Circuits of type RTBE and RTBU are described in the European patent application No. 80 106 010.4, publication No. 26 931, publication date 15.4.81, in the name of the applicant.

The bidirectionality of the transceivers (RTBE, RTBU) allows the same physical way to be used for both transmission directions.

These transceivers are used here to perform the diagnosis of connection continuity, by back-transmitting the signal which arrives at the circuit RTB placed at the far end of a line and thus allowing the comparison between sent signal and back signal (echo check) without requiring further interstage connections.

$RTBE_{UL}$ and $RTBU_{UL}$ denote transceivers analogous to the preceding ones inserted on the incoming and on the outgoing side of the line units (UL) placed at the periphery with respect to the connection network.

The first-level controller CTR1, consists of a microprocessor which controls, through the bidirectional bus bd, switching elements ME1, ME2, MU1, MU2 and the samplers CTDE1, CDTE5 and CDTU1, CDTU5. Besides controller CTR1 through the bidirectional connection bc, can dialog with the higher-level controller CP.

The operation of the circuit whose block diagram is depicted in Figure 2 is the following: 16 incoming groups coming from line units (UL) which, through the transceiver RTBE1, enter ME1, ME2 as well as the incoming sampling circuit CDTE1, are connected on the incoming side of the peripheral switching unit (UCP1).

Switching elements ME1, ME2 upon the switching command received from CTR1 through bus bd, perform the suitable switching operations between the channels of the incoming and outgoing groups.

The 16 groups outgoing from ME1, ME2, belonging to the first time stage (1T), are respectively transmitted through the outgoing transceiver RTBU1 to the incoming transceivers RTBE2 of the subsequent time stage (2T).

Each group received by an incoming transceiver RTBE2 of the second stage (2T) is retransmitted to the outgoing transceiver RTBU1 of the previous stage (1T), by which it has been generated, and then sent to the outgoing sampler CDTU1.

On the outgoing side of UCP1 there are connected 16 groups coming from transceivers RTBU4 relating to the 4th stage switching unit (4T) which, through transceivers RTBE5, switching elements MU1, MU2, samplers CDTE5, CDTU5, are processed analogously to what described for the incoming side of UCP1 in order to obtain 16 outgoing groups sent to transceivers $RTBE_{UL}$ of line units (UL).

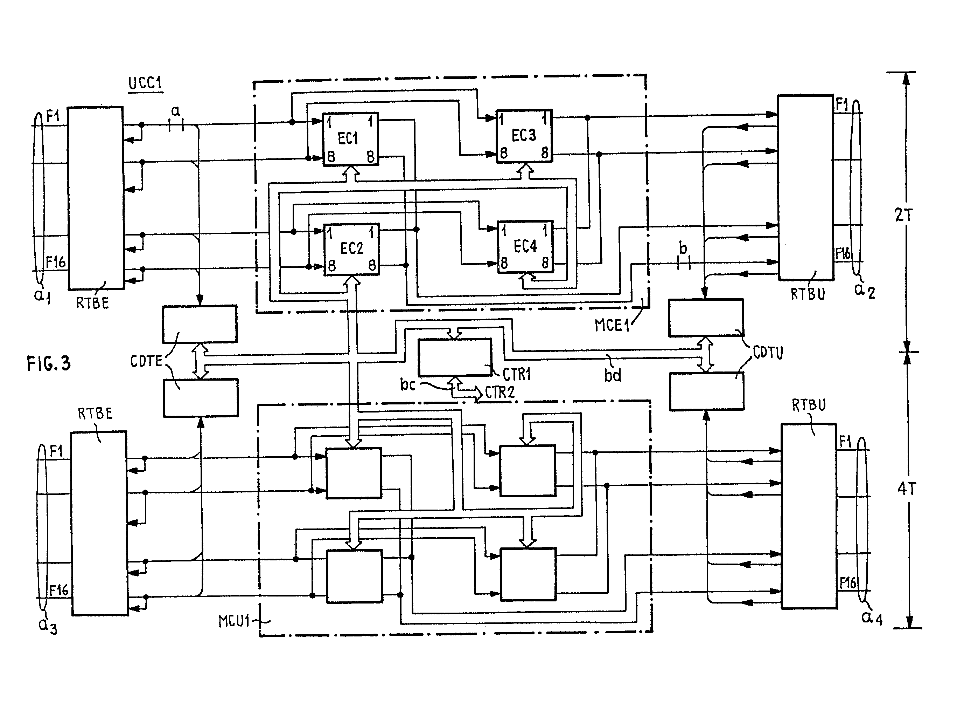

Figure 3 shows in more detail the folded switching unit UCC1 of central unit UC8.

In that Figure MCE1, MCU1, CTR1 denote the same blocks shown in Figure 1. More particularly, the switching elements MCE1 and MCU1 are obtained by interconnecting under matrix format four switching elements EC1, EC2, EC3, EC4, of the ME1 kind made of 256 channels so as to obtain a single non-blocking switching element capable of connecting 512 channels.

This structural organization and its operation as well are also described in the European patent application No. 81 103 628.4, publication No. 39 948, previously cited with reference to switching elements ME1 ... ME256 of Figure 1; more particularly that structural organization is shown in Figure 3 of the mentioned patent application.

Controller CTR1, among the other tasks which will be examined hereinafter, manages the control of the four switching elements contained in MCE1 and MCU1.

Blocks denoted by RTBE, RTBU, CDTE, CDTU are analogous to those shown in Figure 2 and are connected in the same way.

Connection groups denoted by $a_1$, $a_2$, $a_3$, $a_4$ are exactly the same as those of Figure 1.

Bus bd and connection bc are identical to those shown in Figure 2.

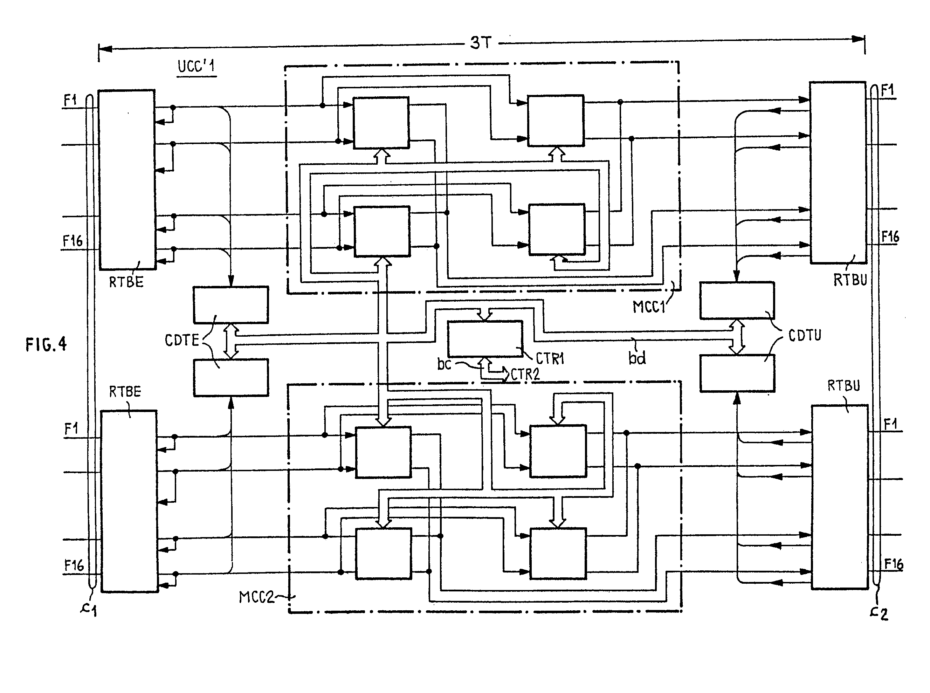

Figure 4 shows in more detail the unfolded switching unit UCC'1 of central unit UC8.

In that Figure MCC1, MCC2, CTR1 and $c_1$, $c_2$ denote the same blocks and the same groups of wires shown in Figure 1; RTBE, RTBU, CDTE, CDTU denote blocks perfectly analogous to those shown in Figure 3.

With the organization of the switching elements MCE1, MCU1, MCC1, MCC2, given by way of example in Figures 3 and 4, double-capacity switching elements, if available due to technological progress, could be used without altering the structure of the whole network shown in Figure 1.

With reference to Figures 2, 3, 4 it is worth noting that in case the retransmission of the group received by an incoming transceiver RTBE is effected on the same physical path over which said group has been received, non-detection of a failure due to an interruption of the physical path itself (open circuit) may occur. In this case, in fact, transceiver RTBU placed upstream of the incoming transceiver RTBE would however receive because of reflection on the cable (open circuit) a false echo which might mislead the transfer diagnosis sampler.

A simple and easy way to overcome this disadvantage with the just described network resides in the use of the second physical way, provided together with connections among the various switching units for the back transmission of the diagnostic group.

In fact, as shown in Figure 1, for example switching element MCE1 of UCC1 of the 2nd stage is connected through only two physical paths ($a_1$) to switching elements ME1, ME2 of UCP1; analogously two physical paths ($a_4$) are provided for the connection between MCU1 of UCC1 and switching elements MU1, MU2 of UCP1.

The same process applies to the connection paths among the switching elements of all the folded central switching units UCC and those of unfolded switching units UCC'.

The capacity values as to the number of PCM channels processed by the single switching units have been pre-determined so as to allow the implementation with the present technology of the switching unit by a single replaceable structural element (board including connectors).

More particularly said capacity values have been determined on the basis of the properties

— of the used switching elements (ME, MCE, MCC, MCU, MU);
— of the support circuits designed for the diagnosis (CDT, RTB);
— of commercial microprocessors (CTR1), and
— of relative peripheral circuits taking also into account the specifications for the standard board size, such as for instance the "Doppio Europa" in agreement with the DIN specifications.

The utilization of network structures which make intensive and prevalent use of replaceable structural elements of the same kind, like those here examined, is advantageous from the manufacture, the stocking and maintenance standpoints.

Figure 5 is a schematic representation of the hierarchical structure of the central exchange control system (CC), of the 3rd level controller CTR3, of the 2nd level controllers CTR2-CP and finally of the 1st level controllers CTR1.

Numbers 1, 8, 9, 24, 16, 113, 114, 128 written near the CTR1 denote the number of the controllers CTR1 which are needed. Thus for instance for each UC (in the Figure UC1, ..., UC8) there are provided 24 CTR1; for each CP there are provided 16 CTR1. The arrows outgoing from CTR1 denote the switching units (UCC1, ..., UCC16, UCC'1. ..., UCC'8, UCP1 ..., UCP16, ..., UCP113, ..., UCP128) served by said controllers.

The diagnosis process is performed in a distributed way on switching units (UCP, UCC, UCC') forming the network.

Since this process repeats analogously for the three described kinds of switching units, for the sake of brevity only the diagnostic process relating to the folded central switching unit (UCC1 of Figure 3) will be described hereinafter by way of example.

Through bidirectional connection bc the 2nd-level controller CTR2 dependent on the routing search effected on UC8, sends to the folded central switching unit UCC1 an interconnect command between an incoming channel and an outgoing one; the latter may correspond to the second stage (MCE1) or to the 4th stage (MCU1).

CTR1 is capable of recognizing whether the "connect command" relates to MCE1 or to MCU1; by way of example let us suppose that MCE1 is involved and that the command is of connecting the channel $a$ of the incoming group 1 with the channel $b$ of the outgoing group 16.

CTR1, depending on the order number of the (incoming outgoing) group involved in the switching, selects the switching unit, namely EC1, on which the connection connecting the channel $a$ of input 1 and channel $b$ of output 8 of EC1 is to be established.

CTR1 will have previously disabled channel $b$ of the output 8 of EC2, which has its outputs connected in parallel (AND-wired) with the corresponding outputs of EC1. After that the connection is established.

Controller CTR1 can effect, according to intervention modalities which will be defined case by case, the diagnosis according to the procedure which will be hereinafter described, on any connection which is either already established or still in progress.

With reference to the chosen example, the diagnosis is performed by extracting an octet of the channel $a$ of the input group 1 and by comparing it with the same octet of the channel $b$ of outgoing group 16, depending on the route on the physical path $a_2$ of the connection towards the subsequent stage and by taking into account the delay relating to the frame unit introduced by the transit of the connection in MCE1.

In this way, a diagnosis is operated not only on switching element MCE1, but also on its connection with other switching elements belonging to different stages.

By applying this method to all the network stages the "tangency" is obtained among the diagnoses of adjacent switching units involved in a complete connection between the network input and output, without leaving portions of the network undiagnosed.

More particularly, CTR1 calculates said transit delay, it sends the octets extracting commands to CDTE and CDTU, respectively, and finally compares said commands between them.

If the comparison result is positive, CTR1 continues its control operation according to the modalities envisaged case by case; if the result is negative it means that a malfunctioning has occured which may concern: switching element MCE1; transceiver RTBU of UCC1, or transceiver RTBE, connected to RTBU and belonging to the following stage; all the interconnections concerned in the above-mentioned blocks.

The malfunctioning may also have concerned the peripheral units of CTR1 and more particularly the samplers CDTE, CDTU and their respective connections.

The detection of possible troubles in the processing unit (microprocessor, memories) of CTR1 is actuated by self-diagnosis methods of a known type (parity-checks, software-traps).

Also the testing of the good functioning of connection bc between CTR2 and CTR1 is performed according to well-known methods, such as the message parity check (check-sum).

Finally, the malfunctioning may however be localized inside UCC1, or may concern the transceiver RTBE of the subsequent stage and relative connection.

It is up to the higher-level controller CTR2, depending on the malfunctioning signallings it receives through the various CTR1, to proceed according to modalities defined while designing the apparatus, to isolate the unit considered in trouble and to effect the subsequent network reconfiguration; the latter may be effected by using whatever method known in the technique.

The diagnosis of the higher hierarchical portion of the control-tree branches (CTR1-CP, CTR3) is effected according to known methodologies.

The just described diagnostic process allows different methods for testing the connections. For instance, it is possible to test the connection immediately after its establishment, to cyclically scan all parts of the connections already established, or to effect both tests by assigning priority criteria which will be defined while designing the system.

As a rule, the just established connection ought to be assigned maximum priority.

Besides, said diagnostic process is compatible with known global processes of network supervision, carried out by a supervising device which may be present in the exchange.

From what has been previously expounded it is evident that the tasks of the 1st level controller CTR1 are according to a priority order; execution of connect and disconnect commands coming from CTR2, diagnosis of the established connection, self-diagnosis; finally of course CTR1 is to send possible alarm signallings to CTR2 through connection bc.

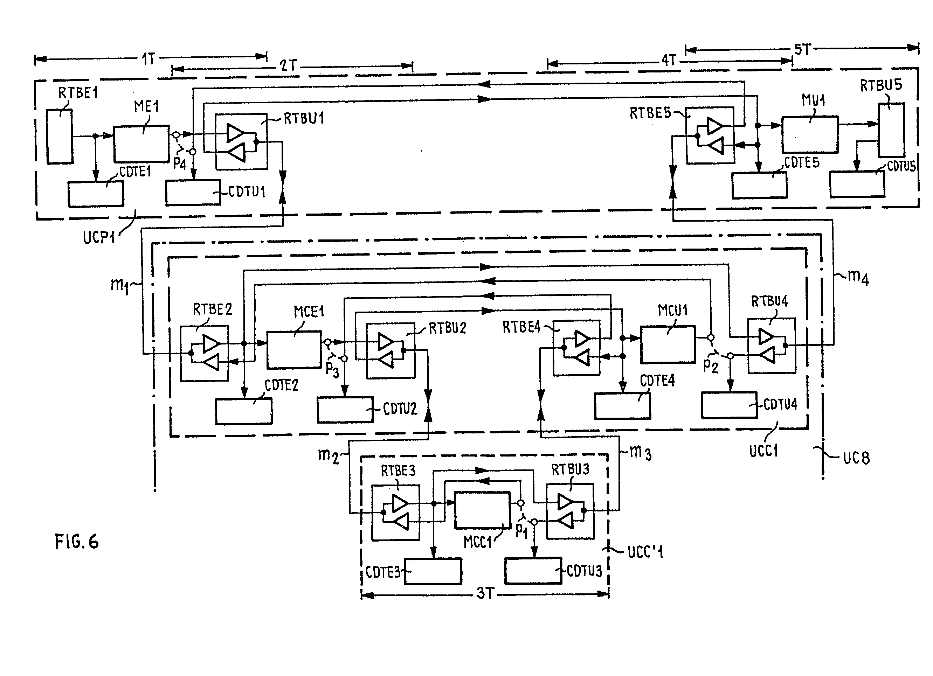

A different way of performing the interstage connection, exploiting the folding network and the bidirectional transceivers (RTB), already examined, is the one represented in Figure 6.

The blocks of Figure 6 are the same as those already examined in Figures 2, 3 and 4.

Reference $m_1$ (Figure 6) denotes the bidirectional support physical path from the PCM group connecting the switching element ME1 of the 1st stage (1T) with the switching element MCE1 of the second stage (2T) as well as for the PCM group which connects the switching element MCU1 of the 4th stage (4T) with the switching element MU1 of the 5th time stage (5T) of the network.

Reference $m_2$ denotes the bidirectional support physical path for the PCM group connecting the switching element MCE1 of the second (2T) time stage with switching element MCC1 of the third (3T) stage and for PCM group connecting the latter element with the element MCU1 of the fourth (4T) time stage.

Reference $m_3$ denotes the bidirectional support physical path for the PCM group of diagnosis (echo check) relative to the connection between the second (2T) and the third (3T) stage and for the PCM group of diagnosis relative to the connection between the third (3T) and 4th (4T) time stage.

Reference $m_4$ denotes a bidirectional support physical path for the PCM group of diagnosis relative to the connection between the 1st (1T) and the 2nd (2T) time stage and for the PCM group of diagnosis relative to the connection between the 4th (4T) and 5th (5T) time stage.

The peripheral switching unit UCP1, already described in Figure 2, is shown in Figure 6, modified in the connections between RTBU1 and CDTU1 as well as in those between RTBE5 and CDTE5.

More particularly, the variation is that the sampler CDTU1, relative to the switching element ME1, is connected to the output of the transceiver RTBE5, and not as in Figure 2 to the output of transceiver RTBU1; and that the input of switching element MU1 (Figure 6) is connected to the output of transceiver RTBU1 and not, as in Figure 2, to the output of RTBE5.

The central switching units UCC1 and UCC'1, already described in Figures 3 and 4, are shown in Figure 6 with changes in the connections between RTBU and CDTU and those between RTBE and CDTE.

More particularly the variation for the folded central unit UCC1 of Figure 3 is that sampler CDTU, relative to switching element MCE1, is referred to as CDTU2 in Figure 6 and now is connected with its inputs to the incoming transceiver RTBE4 (Figure 6), placed at the side of MCU1; the CDTE4 of the 4th (4T) stage is now connected to the transceiver outputs RTBU2, placed at the MCE1 side.

In addition, the MCU1 output is connected to the input of transceiver RTBE2 and the input of switching element MCE1 is connected to the input of transceiver RTBU4.

An analogous modification takes place for the unfolded central unit UCC'1 (Figure 4) that is why MCC1 outputs are connected to RTBE3 inputs and MCC1 input, instead of being connected as in Figure 4 to RTBE, is connected to the RTBU3 input.

Figure 6 outlines how the physical path $m_2$ is used for instance as a support for the connection between the output of the 2nd stage switching element MCE and the input of the 3rd stage switching element MCC1 and at the same time for the connection between the output of switching element MCC1 and the input of the 4th-stage switching element MCU1.

As to the diagnostic function of the physical connections allowing the attainment of a diagnosis "tangency" among the various network stages, the second bidirectional physical support $m_3$ is to be used, which in the connection scheme depicted in Figures 3 and 4 was the connection physical path $c_2$ between the 3rd and 4th time stages.

The advantages derived by carrying out the interstage connections according to the block diagram of Figure 6 are:

— complete separation of the paths for the groups of interstage connections, and their diagnosis, so that it is no longer necessary to condition the connections and their diagnosis as previously described by effecting them on different physical paths;

— halving of the number of cables used in the network when interstage connection diagnosis is not required.

In this case there are only the bidirectional connection paths $m_1$, and $m_2$ and there is no longer the already examined diagnostic tangency. It will be sufficient to establish the connections represented in dotted lines in Figure 6 by $p_1$, $p_2$, $p_3$ and $p_4$ placed at the outputs of the switching elements, and more particularly of MCC1, MCU1, MCE1, ME1 respectively.

Said connections $p_1$, ..., $p_4$ by directly connecting the switching element outputs with the inputs of "transfer diagnosis samplers" (CDTU) for the transfer of outputs leave the process of diagnosis of the switching units unchanged.

It is clear that the above considerations apply, by means of simple adjustments which can be performed by any one skilled in the art, to networks with a different channel capacity or with a different number of time stages.

## Claims

1. A modular structure PCM distributed-control and distributed-diagnosis switching network, belonging to an exchange having a centralized telephone control unit, and consisting of:

— modular switching units (UCP) functionally diversified in a plurality of peripheral switching units folded from the building standpoint and comprising the first and the last time stage of said network,
— a plurality of central switching units (UCC) folded from the building standpoint and comprising the second and the last but one time stages,
— and a plurality of unfolded central switching units (UCC') comprising the intermediate stage of the same network,

characterized in that each of said peripheral switching units (UCP), of said folded central units (UCC) and of said unfolded central units (UCC') is physically contained in a single standardized printed circuit board which can be extracted and replaced, said board being the modular structural element of said network structure; further characterized in that said modular switching units basically comprise integrated switching elements (M, MC) equipped with a microprocessor-compatible asynchronous control system, integrated support circuits (RTB, CDT) for diagnosis and a microprocessor (CTR1) forming the lowest level of a multilevel hierarchical control network; said integrated support circuits (RTB, CDT) performing in conjunction with said microprocessor (CTR1) the distributed diagnosis at the level of each modular structural element.

2. PCM switching network according to claim 1, characterized in that said multilevel hierarchical control network comprises: a controller (CTR3) at the highest hierarchical level directly connected to the centralized telephone control unit (CC); a plurality of controllers at the intermediate hierarchical level, each connected to said controller (CTR3) at the highest hierarchical level, and functionally subdivided into controllers (CP) of groups of peripheral switching units and controllers (CTR2) of groups of folded and unfolded central switching units; a plurality of groups of controllers at the lowest hierarchical level, each group connected to one of said controllers at the intermediate hierarchical level, each of said controllers at the lowest hierarchical level being one of said microprocessors (CTR1); further characterized in that said controller (CTR3) at the highest hierarchical level receives from said centralized telephone control unit the commands of connections and release for the whole network, makes the searches for a connecting path between the first and second time stage and between the last but one and the last time stage, sends the commands of connection, depending on said searches, and of release to said controllers at the intermediate hierarchical level, said controllers (CTR2) of groups of central switching units making searches for connection paths between the second and the intermediate time stage and between the intermediate and the last but one stage, and sending commands of connection, depending on said searches, and of release to said controllers of the lowest hierarchical level, said controllers (CP) of groups of peripheral switching units sending the commands of connection and release to said controllers at the lowest hierarchical level, each of said controllers at the lowest hierarchical level decoding and sending the commands of connection and release to the respective integrated switching element (M, MC).

3. PCM switching network according to claim 1, characterized in that each of said peripheral switching units (UCP) is connected to a central folded switching unit (UCC) via two output paths forming the connection between the outputs of the first time stage and the inputs of the second time stage and via two input paths, forming the connection between the outputs of the last but one time stage and the inputs of the last stage.

4. PCM switching network according to claim 1, characterized in that each of said central folded switching units (UCC) is connected to a central unfolded switching unit (UCC') via two output paths forming the connection between the outputs of the second time stage and the inputs of the intermediate time stage and via two input paths forming the connection between the outputs of the intermediate time stage and the inputs of the last but one time stage.

5. PCM switching network according to claim 1, characterized in that said integrated support circuits (RTB, CDT) for diagnosis consist of: sampling circuits (CDTE, CDTU) for the diagnosis of the transfer of PCM signals within the time stage they belong to and within the interconnection between said time stage they belong to and the next; simultaneous bidirectional transceivers (RTBE, RTBU) used to diagnose a connection continuity, each transceiver placed at the far end of a connection path (line) back-transmitting the signal it receives, so as to allow the comparison (echo check) between the back signal and the sent one, said signals being forwarded on different physical paths.

6. PCM switching network according to claim 1 and 5, characterized in that said sampling circuits (CDTE, CDTU) and said simultaneous bidirectional transceivers (RTBE, RTBU) cooperate to diagnose both the same structural element and the connections between said structural element and the contiguous ones so as to obtain the "tangency" among the diagnoses of the contiguous structural elements involved in a complete connection between the network input and output; said cooperation being implemented by inserting between the switching elements (MCC, MCE, MCU, ME, MU) and the relative sampling circuits (CDTE, CDTU) belonging to a structural unit, the bidirectional transceivers (RTBE, RTBU) belonging to contiguous structural units.

7. PCM switching network according to any of the claims 5 or 6, characterized in that the structural element performing as peripheral switching unit (UCP1) consists of:

— four ones of the simultaneous bidirectional transceivers (RTBE1, RTBE5, RTBU1, RTBU5) used to diagnose the continuity of the connections relating to 16 PCM groups, on the basis of the "echo check" criterion;
— one of the controllers (CTR1) at the lowest hierarchical level;
— four ones of the integrated switching elements (ME1, ME2, MU1, MU2), capable of effecting, on the basis of the switch commands coming from said controller (CTR1), the suitable switching operations between the channels of the incoming groups and those of the outgoing groups;
— four ones of the sampling circuits (CDTE1, CDTE5, CDTU1, CDTU5) for the diagnosis of the transfer of the bit octets within the time stage they belong to.

8. PCM switching network according to any of the claims 5, 6 or 7, characterized in that the structural elements performing as folded (UCC1) and unfolded (UCC'1) central switching units consist of:

— four ones of the simultaneous bidirectional transceivers (RTBE, RTBU) capable of diagnosing the continuity of the incoming and outgoing connections on the basis of the "echo check" criterion;
— two non-blocking switching elements (MCE1, MCU1, MCC1, MCC2) capable of connecting 512 channels;
— one of the controllers (CTR1) at the lowest hierarchical level;
— four ones of the sampling circuits (CDTE, CDTU) for the diagnosis of the transfer of the bit octets within the time stage they belong to.

9. PCM switching network according to claim 5 or any of claims 6 to 8 referred to claim 5, characterized in that interstage connections between each peripheral switching unit (UCP1) and each folded central switching unit (UCC1) are implemented by a first pair of bidirectional transceivers (RTBU1, RTBE2) which are connected by a first bidirectional connection $(m_1)$ in order to connect the input of the first time stage with the input switching element of the second time stage and at the same time to connect the output of the switching element of the last but one time stage with the input of the switching element of the last time stage, the diagnosis of said interstage connections being effected through a second pair of bidirectional transceivers (RTBU4, RTBE5) which are connected by a second bidirectional connection $(m_4)$, and in that the interstage connections between each folded central switching unit (UCC1) and each unfolded central switching unit (UCC'1) are obtained by means of a third pair of bidirectional transceivers (RTBU2, RTBE3) which are connected by a third bidirectional connection $(m_2)$ to connect the output of the second time stage with the input of the intermediate time stage and at the same time the output of the intermediate time stage with the input of the last but one time stage, the diagnosis of said interstage connections being effected through a fourth pair of bidirectional transceivers (RTBU3, RTBE4) which are connected by a fourth bidirectional connection $(m_3)$.

**Revendications**

1. Structure modulaire d'un réseau de commutation MIC, à commande et diagnostic distribués, faisant partie d'un autocommutateur à commande centralisée, et realisée par:

— des unités de commutation modulaires (UCP) qui sont fonctionellement diversifiées en une pluralité d'unités de commutation periphériques repliées du point de vue structurel et comprenant le premier et le dernier étage temporel dudit réseau;
— une pluralité d'unité de commutation centrales repliées (UCC) du point de vue structurel, comprenant le deuxième et l'avant dernier étage temporel, et

— une pluralité d'unités de commutation centrales non repliées (UCC') comprenant l'étage intermédiaire (3T) du même réseau;

caractérisé en ce que chacune desdites unités de commutation périphériques (UCP), desdites unités centrales repliées (UCC) et desdites unités centrales non repliées (UCC') est physiquement contenue dans une seule carte standardisée qui peut être extraite et remplacée, ladite carte constituant l'élément de structure modulaire de ladite structure du réseau;

caractérisé de même en ce que lesdites unités de commutation modulaires, sont essentiellement constituées par des éléments de commutation (M, MC) intégrées avec commande du type asynchrone compatible avec un microprocesseur, par des circuits intégrés de support pour le diagnostic (RTB, CDT) et par un microprocesseur (CTR1), qui constitue le niveau le plus bas d'un réseau hiérarchique de commande à plusieurs niveau; lesdits circuits intégrés de support (RTB, CDT) effectuant le diagnostic distribué au niveau de chaque élément à structure modulaire, conjointement avec ledit microprocesseur (CTR1).

2. Réseau de commutation MIC, suivant la revendication 1, caractérisé en ce que ledit réseau de commande hiérarchique à plusieurs niveaux comprend: un contrôleur (CTR3) su niveau hiérarchique le plus élevé connecté directement à l'unité de contrôle téléphonique centralisée (CC); une pluralité de contrôleurs au niveau hiérarchique intermédiaire, chacun étant connecté audit contrôleur (CTR3) au niveau hiérarchique le plus élevé, et fonctionellement subdivisés en contrôleurs (CP) de groupes d'unités de commutation périphériques et contrôleurs (CTR2) de groupes d'unités centrales de commutation repliées et non repliées; une pluralité de groupes de contrôleurs au niveau hiérarchique le plus bas, chaque groupe connecté à un desdits contrôleurs au niveau hiérarchique intermédiaire, chaque contrôleur au niveau hiérarchique le plus bas étant un desdits microprocesseurs (CTR1); caractérisé de même en ce que ledit contrôleur (CTR3) au niveau hiérarchique le plus élevé reçoit de ladite unité centrale de contrôle téléphonique les commandes de connexion et libération pour le réseau entier, effectue la recherche d'une voie de connexion entre le premier et le deuxième étage temporel et entre l'avant-dernier et le dernier étage temporel, envoie les commandes de connexion, qui dépendent desdites recherches, et de libération audits contrôleurs au niveau hiérarchique intermédiaire, lesdits contrôleurs (CTR2) de groupes d'unité de commutation centrales faisant des recherches pour des voies de connexion entre les étages temporales deuxième et intermédiaire et entre les étages temporels intermédiaire et avant-dernier, et envoyant des commandes de connexion, dépendant desdites recherches, et de libération auxdits contrôleurs du niveau hiérarchique le plus bas, lesdits contrôleurs (CP) des groupes d'unités de commutation périphériques envoyant les commandes de connexion et libération auxdits contrôleurs au niveau hiérarchique le plus bas, chacun desdits contrôleurs au niveau hiérarchique le plus bas décodant et envoyant les commandes de connexion et libération à l'élément de commutation intégré correspondant (M, MC).

3. Réseau de commutation MIC suivant la revendication 1, caractérisé en ce que chaque unité de connexion périphérique (UCP) est connectée à une unité de connexion centrale repliée (UCC) à l'aide de deux voies physiques de sortie qui constituent la connexion entre les sorties du premier étage temporel et les entrées du deuxième étage, et au moyen de deux voies physiques d'entrée qui constituent la connexion entre les sorties de l'avant-dernier étage temporel et les entrées du dernier étage.

4. Réseau de commutation MIC suivant la revendication 1, caractérisé en ce que chaque unité de connexion centrale repliée (UCC) est connectée à une unité de connexion centrale non repliée (UCC') au moyen de deux voies de sortie qui constituent la connexion entre les sorties du deuxième étage temporel et les entrées de l'étage temporel intermédiaire, et à l'aide de deux voies d'entrée qui constituent la liaison entre les sorties de l'étage temporel intermédiaire et les entrées de l'avant-dernier étage temporel.

5. Réseau de commutation MIC suivant la revendication 1, caractérisé en ce que lesdits circuits intégrés (RTB, CDT) de support pour le diagnostic sont constitués par: des circuits d'échantillonnage (CDTE, CDTU) pour le diagnostic du transfert des signaux MIC à l'intérieur de l'étage temporel dont ils font partie et sur l'interconnexion entre ledit étage temporel dont ils font partie, et le suivant, et par des émetteurs-récepteurs bidirectionnels simultanés (RTBE, RTBU) utilisés pour diagnostiquer la continuité d'une connexion, chaque émetteur-récepteur, placé à l'éxtremité distante d'une voie physique de connexion (ligne), renvoyant en arrière le signal qu'il reçoit, pour permettre la comparaison (contrôle par écho) entre le signal de retour et le signal envoyé, lesdits signaux étant émis sur des voies physiques différentes.

6. Réseau de commutation suivant les revendications 1 et 5, caractérisé en ce que lesdits circuits d'échantillonnage (CDTE, CDTU) coopérant avec lesdits émetteurs-récepteurs bidirectionnels simultanés (RTBE, RTBU) pour faire un diagnostic à la fois sur la même unité structurelle et sur les connexions entre ladite unité structurelle et les autres unités contigues de façon à obtenir la "tangence" entre les diagnostics des unités structurelles contigues intéressées à une connexion entière entre l'entrée et la sortie du réseau; la dite coopération étant réalisée en interposant entre les éléments de commutation (MCC, MCE, MCU, ME, MU) et les circuits d'échantillonage relatifs (CDTE, CDTU), qui font partie d'une unité structurelle, les récepteurs-émetteurs bidirectionnels (RTBE, RTBU), faisant partie des unités structurelles contigues.

7. Réseau de commutation MIC suivant les revendications 5 ou 6, caractérisé en ce que l'élément structurel ayant la fonction d'unité de commutation périphérique (UCP1) est constitué par:

— quatre émetteurs-récepteurs bidirectionnels simultanés (RTBE1, RTBE5, RTBU1, RTBU5) utilisés pour le diagnostic de la continuité des connexions relatives à 16 faisceaux MIC, sur la base du critère de contrôle par écho;
— un contrôleur (CTR1) au niveau hiérarchique le plus bas;
— quatre éléments de commutation intégrées (ME1, ME2, MU1, MU2) aptes à effectuer, sur la base des ordres de commutation en provenance dudit contrôleur (CTR1), les commutations convenables entre les canaux des faisceaux entrants et ceux des faisceaux sortants;
— quatre circuits d'échantillonnage (CDTE1, CDTE5, CDTU1, CDTU5) pour le diagnostic du transfert des octets de bits à l'intérieur de l'étage temporel dont ils font partie.

8. Réseau be commutation suivant une quelconque des revendications 5, 6 ou 7, caractérisé en ce que l'élément structurel ayant la fonction d'unité de commutation centrale repliée (UCC1) et non repliée (UCC'1) est constitué par:

— quatre émetteurs-récepteurs bidirectionnels simultanés (RTBE, RTBU) aptes à diagnostiquer la continuité des connexions entrantes et sortantes sur la base du critère de contrôle par écho;
— deux éléments de connexion (MCE1, MCU1; MCC1, MCC2) non bloqantes capables de connecter 512 canaux;
— un contrôleur (CTR1) au niveau hiérarchique le plus bas;
— quatre circuits d'échantillonnage (CTDE, CDTU) pour le diagnostic de transfert des octets de bits à l'intérieur de l'étage temporel dont ils font partie.

9. Réseau de commutation MIC suivant la revendication 5 ou une quelconque des revendications 6 à 8, référées à la revendication 5, caractérisé en ce que les connexions interétage entre chaque unité de connexion périphérique (UCP1) et chaque unité de connexion centrale repliée (UCC1) sont réalisées par une première paire d'émetteurs-récepteurs bidirectionnels (RTBU1, RTBE2) qui sont connectés par une première liaison bidirectionelle (m₁) pour connecter l'entrée du premier étage temporel à l'élément de connexion d'entrée du deuxième étage et, en même temps, pour connecter la sortie de l'élément de connexion de l'avant-dernier étage temporel à l'entrée de l'élément du dernier étage, le diagnostic desdites connexions interétage étant effectué à l'aide d'une deuxième paire d'émetteurs-récepteurs bidirectionnels (RTBU4, RTBE5), qui sont connectés à l'aide d'une deuxième liaison bidirectionnelle (m₄), et caractérisé en ce que les connexions interétage entre chaque unité de connexion central repliée (UCC1) et chaque unité de connexion centrale non repliée (UCC'1) sont effectuées à l'aide d'une troisième paire d'émetteurs-récepteurs bidirectionnels (RTBU2, RTBE3) qui sont connectés par une troisième liaison bidirectionnelle (m₂) pour connecter la sortie du deuxième étage temporel à l'entrée de l'étage intermédiaire et, en même temps, la sortie de l'étage temporel intermédiaire à l'entrée de l'avant-dernier étage, le diagnostic desdites connexions interétage étant effectué au moyen d'une quatrième paire d'émetteurs-récepteurs bidirectionnels (RTBU3, RTBE4) qui sont connectés par une quatrième liaison bidirectionnelle (m₃).

**Patentansprüche**

1. Modular aufgebautes PCM-Koppelnetz mit verteilter Steuerung und verteilter Fehlerdiagnose, das zu einer eine zentralisierte Fernsprechsteuereinheit aufweisenden Vermittlungsstelle gehört und aus folgenden Einzelteilen besteht:

— modularen Schalteinheiten (UCP), die funktionell zu einer Mehrzahl von peripheren Schalteinheiten diversifiziert sind, die hinsichtlich des Aufbaustandpunkts gefaltet sind und die erste und die letzte Zeitstufe des Koppelnetzes umfassen,
— einer Mehrzahl zentraler Schalteinheiten (UCC), die hinsichtlich des Aufbaustandpunkts gefaltet sind und die zweite und die vorletzte Zeitstufe umfassen,
— und einer Mehrzahl ungefalteter zentraler Schalteinheiten (UCC'), die die Mittelstufe dieses Koppelnetzes umfassen,

dadurch gekennzeichnet, daß jede der peripheren Schalteinheiten (UCP), der gefalteten zentralen Schalteinheiten (UCC) und der ungefalteten zentralen Schalteinheiten (UCC') physikalisch auf einer einzigen standardisierten Karte gedruckter Schaltung enthalten ist, die abnehmbar und ersetzbar ist und das modulare Bauelement der Koppelnetzstruktur ist; daß die modularen Schalteinheiten als Hauptbestandteile integrierte Schaltelemente (M, MC) enthalten, die mit einem mikroprozessor-kompatiblen asynchronen Steuersystem, integrierten Hilfsschaltungen (RTB, CDT) für die Fehlerdiagnose und einem Mikroprozessor (CTR1), der die niedrigste Ebene eines in mehreren hierarchischen Ebenen aufgebauten Steuernetzwerks bildet, ausgestattet ist; und daß die integrierten Hilfsschaltungen (RTB, CDT) in Verbindung mit dem Mikroprozessor (CTR1) die verteilte Fehlerdiagnose in der Ebene jedes modularen Bauelements durchführen.

2. PCM-Koppelnetz nach Anspruch 1, dadurch gekennzeichnet, daß das in mehreren hierarchischen Ebenen aufgebaute Steuernetzwerk folgende Einzelschaltungen umfaßt: eine der höchsten hierarchischen Ebene angehörende Steuerschaltung (CTR3), die unmittelbar mit der zentralisierten Fernsprech-Steuereinheit (CC) verbunden ist; eine Mehrzahl von der hierarchischen Mittelebene angehörenden Steuerschaltungen, von denen jede mit der der höchsten hierarchischen Ebene angehörenden Steuerschaltung (CTR3) verbunden ist und die funktionell in Steuerschaltungen (CP) von Gruppen peripherer Schalteinheiten und Steuerschaltungen (CTR2) von Gruppen gefalteter und ungefalteter zentraler Schalteinheiten unterteilt sind; eine Mehrzahl von der untersten hierarchischen Ebene angehörenden Gruppen von Steuerschaltungen, von denen jede mit einer der in der hierarchischen Mittelebene befindlichen Steuerschaltungen verbunden ist, wobei jede der der untersten hierarchischen Ebene angehörenden Steuerschaltungen einer der Mikroprozessoren (CTR1) ist; weiterhin dadurch gekennzeichnet, daß die der obersten hierarchischen Ebene angehörende Steuerschaltung (CTR3) von der zentralisierten Fernsprech-Steuereinheit die Befehle für Verbindungen und Auslösungen für das gesamte Koppelnetz empfängt, die Wegesuche für einen Verbindungsweg zwischen der ersten Zeitstufe und der zweiten Zeitstufe und zwischen der vorletzten und der letzten Zeitstufe durchführt, die Verbindungsbefehle in Abhängigkeit von dieser Wegesuche sowie Auslösebefehle an die Steuerschaltungen in der hierarchischen Mittelebene abgibt, wobei die Steuerschaltungen (CTR2) von Gruppen zentraler Schalteinheiten Wegesuche nach Verbindungswegen zwischen der zweiten und der mittleren Zeitstufe und zwischen der mittleren und der vorletzten Zeitstufe durchführen und in Abhängigkeit von diesen Wegesuchen Verbindungsbefehle und Auslösebefehle zu den der niedrigsten hierarchischen Ebene angehörenden Steuerschaltungen senden und die Steuerschaltungen (CP) der Gruppen von peripheren Schalteinheiten die Befehle von Verbindung und Auslösung an die der niedrigsten hierarchischen Ebene angehörenden Steuerschaltungen geben, von denen jede die Befehle für Verbinden und Auslösen dekodiert und sie an die jeweiligen integrierten Schaltelemente (M, MC) sendet.

3. PCM-Koppelnetz nach Anspruch 1, dadurch gekennzeichnet, daß jede der peripheren Schalteinheiten (UCP) mit einer zentralen gefalteten Schalteinheit (UCC) über zwei Ausgangswege, die die Verbindung zwischen den Ausgängen der ersten Zeitstufe und den Eingängen der zweiten Zeitstufe bilden, sowie über zwei Eingangswege, die die Verbindung zwischen den Ausgängen der vorletzten Zeitstufe und den Eingängen der letzten Zeitstufe bilden, verbunden sind.

4. PCM-Koppelfeld nach Anspruch 1, dadurch gekennzeichnet, daß jede der gefalteten zentralen Schalteinheiten (UCC) mit einer ungefalteten zentralen Schalteinheit (UCC') über zwei Ausgangswege, die die Verbindung zwischen den Ausgängen der zweiten Zeitstufe und den Eingängen der mittleren Zeitstufe bilden, sowie über zwei Eingangswege, die die Verbindung zwischen den Ausgängen der mittleren Zeitstufe (3T) und den Eingängen der vorletzten Zeitstufe bilden, verbunden ist.

5. PCM-Koppelnetz nach Anspruch 1, dadurch gekennzeichnet, daß die integrierten Hilfsschaltungen (RTB, CDT) für die Diagnose aus folgenden Einzelschaltungen bestehen: Abtastschaltungen (CDTE, CDTU) für die Diagnose des Transfers von PCM-Signalen innerhalb der Zeitstufe, zu der sie gehören, und innerhalb der Verbindung zwischen der Zeitstufe, zu der sie gehören, und der nächsten; und simultanen in beiden Richtungen wirksamen Senderempfängern (RTBE, RCBU), die zum Diagnostizieren einer Verbindungskontinuität verwendet werden, wobei jeder Senderempfänger, der am entfernten Ende eines Verbindungswegs (Leitung) angeordnet ist, das von ihm empfangene Signal so zurücksendet, daß der Vergleich (Echoüberprüfung) zwischen dem Rücksignal und dem gesendeten Signal ermöglicht wird, wobei diese Signale auf verschiedenen körperlichen Wegen gesendet werden.

6. PCM-Koppelnetz nach Anspruch 1 und 5, dadurch gekennzeichnet, daß die Abtastschaltungen (CDTE, CDTU) und die simultanen in beiden Richtungen wirksamen Senderempfänger (RTBE, RTBU) zum Diagnostizieren sowohl des Bauelements selbst als auch der Verbindungen zwischen diesem Bauelement und den benachbarten Bauelementen zusammenwirken und so die Berührung unter den Diagnosen der benachbarten Bauelemente, die an einer vollständigen Verbindung zwischen dem Koppelnetzeingang und seinem Ausgang beteiligt sind, ergeben; wobei das Zusammenwirken durch Einfügen der in beiden Richtungen wirkenden Senderempfänger (RTBE, RTBU), die zu den benachbarten Bauelementen gehören, zwischen die Schaltelemente (MCC, MCE, MCU, ME, MU) und die zum Bauelement gehörenden entsprechenden Abtastschaltungen (CDTE, CDTU) schaltungstechnisch verwirklicht ist.

7. PCM-Koppelnetz nach einem der Ansprüche 5 oder 6, dadurch gekennzeichnet, daß das als periphere Schalteinheit (UCP1) wirkende Bauelement aus folgenden Einzelschaltungen besteht:

— vier der simultanen in beiden Richtungen wirkenden Senderempfänger (RTBE1, RTBE5, RTBU1, RTBU5), die zum Diagnostizieren der Kontinuität der sich auf 16 PCM-Bündel beziehenden Verbindungen auf der Basis des Kriteriums "Echoüberprüfung" verwendet sind;

— einer der Steuerschaltungen (CTR1) der untersten hierarchischen Ebene;

— vier der integrierten Schaltelemente (ME1, ME2, MU1, MU2), die auf der Basis der von der Steuervorrichtung (CTR1) kommenden Schaltbefehle die entsprechenden Schaltoperationen zwischen den Kanälen der ankommenden Bündel und denen der abgehenden Bündel bewirken;

— vier der Abtastschaltungen (CDTE1, CDTE5, CDTU1, CDTU5) für die Diagnose der Bitoktettübertragung innerhalb der Zeitstufe, zu der sie gehören.

8. PCM-Koppelnetz nach einem der Ansprüche 5, 6 oder 7, dadurch gekennzeichnet, daß das als gefaltete und als ungefaltete zentrale Schalteinheit (UCC1, UCC1') dienende Bauelement aus folgenden Einzelschaltungen besteht:

— vier der simultanen in beiden Richtungen wirksamen Senderempfänger (RTBE, RTBU), die auf der Grundlage des "Echoüberprüfungs"-Kriteriums die Kontinuität der ankommenden und der abgehenden Verbindungen diagnostizieren;

— zwei nicht-blockierenden Schaltelementen (MCE1, MCU1; MCC1, MCC2), die 512 Kanäle verbinden können;

— einer der Steuerschaltungen (CTR1) der untersten hierarchischen Ebene;

— vier der Abtastschaltungen (CDTE, CDTU) für die Diagnose des Bitoktett-Transfers innerhalb der Zeitstufe, zu der sie gehören.

9. PCM-Koppelfeld nach Anspruch 5 oder einem der auf Anspruch 5 rückbezogenen Ansprüche 6 bis 8, dadurch gekennzeichnet, daß Verbindungen zwischen den Stufen zwischen jeder der peripheren Schalteinheite (UCP1) und jeder der gefalteten zentralen Schalteinheiten (UCC1) schaltungstechnisch verwirklicht sind durch ein erstes Paar in beiden Richtungen wirksamer Senderempfänger (RTBU1, RTBE2), die durch eine erste in beiden Richtungen wirksame Verbindung ($m_1$) verbunden sind, um den Eingang der ersten Zeitstufe mit dem Eingangs-Schaltelement der zweiten Zeitstufe zu verbinden und gleichzeitig den Ausgang des Schaltelements der vorletzten Zeitstufe (4T) mit dem Eingang des Schaltelements der letzten Zeitstufe zu verbinden, wobei die Diagnose dieser Verbindungen zwischen den Stufen durch ein zweites Paar in beiden Richtungen wirksamer Senderempfänger (RTBU4, RTBE5) bewirkt wird, die durch eine zweite in beiden Richtungen wirksame Verbindung ($m_4$) verbunden sind, und daß die Verbindungen zwischen den Stufen zwischen jeder der gefalteten zentralen Schalteinheiten (UCC1) und jeder der ungefalteten zentralen Schalteinheiten (UCC'1) mit Hilfe eines dritten Paars von in beiden Richtungen wirksamen Senderempfängern (RTBU2, RTBE3) verwirklicht sind, die durch eine dritte in beiden Richtungen wirksame Verbindung ($m_2$) verbunden sind, um den Ausgang der zweiten Zeitstufe mit dem Eingang der mittleren Zeitstufe und zugleich den Ausgang der mittleren Zeitstufe mit dem Eingang der vorletzten Zeitstufe zu verbinden, wobei die Diagnose dieser Zwischenstufenverbindungen durch ein viertes Paar in beiden Richtungen wirksamer Senderempfänger (RTBU3, RTBE4) bewirkt wird, die durch eine vierte in beiden Richtungen wirksame Verbindung ($m_3$) verbunden sind.

FIG.1

0056 600

FIG. 2

FIG. 3

FIG. 4

0 056 600

FIG. 5

FIG.6